Europäisches Patentamt

European Patent Office

Office européen des brevets

(11) Publication number: **0 227 432 B1**

## EUROPEAN PATENT SPECIFICATION

(45) Date of publication of patent specification: **20.01.93**   (51) Int. Cl.⁵: **G01L 5/16**

(21) Application number: **86309878.6**

(22) Date of filing: **17.12.86**

(54) Force and torque converter.

(30) Priority: **18.12.85 AU 3934/85**

(43) Date of publication of application:
**01.07.87 Bulletin 87/27**

(45) Publication of the grant of the patent:
**20.01.93 Bulletin 93/03**

(84) Designated Contracting States:
**CH DE FR GB GR IT LI NL SE**

(56) References cited:
**DE-C- 957 980**
**FR-A- 2 458 050**
**FR-A- 2 545 606**
**US-A- 3 628 394**
**US-A- 3 729 990**

**MEASUREMENT TECHNIOUES, vol. 27, no. 9, September 1984, pages 816-819, Plenum Publishing Corporation, New York, US; L.I.TYVES: "Design of a six-component force transducer for an industrial robot"**

**PATENT ABSTRACTS OF JAPAN, vol. 9, no. 292 (P-406)[2015], 19th November 1985; & JP-A-60 129 635 (TATEISHI DENKI K.K.) 10-07-1985**

(73) Proprietor: **SPACEBALL TECHNOLOGIES INC.**
**600 Suffolk Street**
**Lowell, MA 01854(US)**

(72) Inventor: **Hilton, John Allen**
**18 Vianney Crescent**
**Toongabbie New South Wales 2061(AU)**

(74) Representative: **Howden, Christopher Andrew et al**
**FORRESTER & BOEHMERT Franz-Joseph-Strasse 38**
**W-8000 München 40(DE)**

Rank Xerox (UK) Business Services

## Description

The present invention relates to a force and torque converter and has useful applications in a wide field of activities particularly where a manual motion is to be converted into a control "signal". For example, machines such as industrial robots, back hoes and computer graphic workstations have complex control requirements.

In existing systems, control of a vehicle such as a back hoe is achieved by manipulation of levers and more recently by joy sticks. In computer applications joy sticks are a common control system but a computer may also employ a "track ball" or a "mouse". These devices have limited directions of motion and accordingly limited commands only are possible.

In addition to a control system, there is also a need for a sensing system to monitor applied forces and torques; an example of such a sensor system is a system for monitoring applied forces and torques with respect to three axes in a manipulator (see United States Patent 3 921 445 Hill and Sword). In that specification the manipulator is of a hand like form comprising a pair of jaws which are relatively pivotally movable under operation of an electric motor. The manipulator is defined as having a wrist and sensing means are provided for sensing the magnitude and direction of forces along three mutually orthoganal axes intersecting at the wrist and for sensing the magnitude and direction of torques about the axes. The form of the sensing means is a series of sensors extending around the longitudinal axis of the manipulator.

DE957980 (Hermann) deals with the problem of providing a three dimensional apparatus responsive to torque applied about any axis and a displacement force applied in any direction. Hermann proposes complex arrangements which include the use of an array of twelve resilient strips connecting the element to which force and torque is applied to a fixed base structure. Sensors in the form of strain gauges are mounted on each of the strips. One sensor is mounted on each face of each strip so that twenty four sensors are used and output signals are processed to provide an output signal. The physical structure and signal processing in Hermann are complex and it would be desirable to provide an advance in the art which facilitates economic manufacture of a reliable and practical device which can be very sensitive and, furthermore, a device which provides detected signals which can be processed rapidly in a signal processor to provide useful control signals achieved by rapid calculations.

The present invention adopts an approach which is different to the prior art.

According to the present invention, there is provided apparatus for providing command signals comprising a body to which forces in any directions and torques about any axis may be applied, a fixed base carrying respective pairs of resiliently deformable connecting arms each said pair extending away from the base along a different one of three mutually perpendicular axes, herein referred to as the X, Y and Z axes, extending in respective directions herein referred to as the X, Y and Z directions, said arms being slidably seated in the body, and sensor means arranged in a substantially symmetric at least two dimensional array for sensing displacement of each connecting arm whereby the nature of the applied force and torque in respect of at least two of said axes may be determined and corresponding output signals provided.

In a preferred embodiment of the present invention a set of six sensors is provided and full three dimensional sensing occurs. However, for some applications it is not essential to install a full set of six sensors for such three dimensional sensing and as few as four sensors can be installed where detection of only some components of force and torque are required.

In one embodiment of the present invention, the fixed base carries three said pairs of resiliently deformable connecting arms, said pairs extending respectively in the X, Y and Z directions, said array of sensor means including sensor means for sensing displacement of each connecting arm perpendicular to the respective direction along which the arm extends, whereby the nature of the applied force and torque in respect of all three of said reference axes may be determined and corresponding output signals provided.

In the preferred embodiments described below, very small displacements result from the applied translational force and applied torque. Hereinafter the invention will be exemplified with reference to the most complex example in which a three dimensional device is utilised and it will be appreciated that a complex ergonomically designed control system can utilise an apparatus of this form. It is envisaged that for many applications a handle or grip for an operator will be provided and this grip is adapted to receive a translational force and a torque, the translational force being applied in any direction and the torque being about any desired axis. The output signals can be used to control any required device and sophisticated control of, for example, a machine can be achieved with just one control member. This can be very important for the control of complex machines which require an operator to use a multiplicity of separate levers for controlling, e.g. hydraulic circuits. Another area in which there may be very beneficial applications is for control of devices for handicapped persons.

In a preferred embodiment the apparatus is such that only very small displacement results from the applied translational force and/or torque. In the examples described hereinafter the mathematical error resulting from displacement is at most exceedingly small and may be disregarded for very small angles of displacement.

Apparatus according to the invention preferably includes signal processing means for processing the signals detected at the respective sensor means whereby output signals correspond with the applied torque and the applied translational force and, in the case of a three dimensional version of the invention, the output signals represent the resolution of the applied force and applied torque with respect to three mutually perpendicular axes.

According to another aspect of the invention, there is provided apparatus for providing command signals comprising a body to which forces in any directions and torques about any axis may be applied, connecting members attached to the body and each having a respective remote connection point, said connecting members extending away from the body such that in a central position of the body said remote connection points on the connecting members lie on different ones of three mutually perpendicular reference axes extending from a central point of the body, each of the connecting members being connected to the body so as to be pivotable around a different one of the reference axes, respective leg means being fixed to the fixed base and pivotally connected to the respective connecting members at the connection points through universal joints of at least limited range and motion, biasing means being provided to bias the connecting members towards the central point, and sensor means arranged in a substantially symmetric at least two dimensional array for sensing displacement of each connecting member and/or each leg means whereby the nature of the applied force and torque in respect of at least two said reference axes may be determined and a corresponding output signal provided.

Preferably, each of the legs is in the form of a resilient connecting structure comprising a plate member forming a universal joint member for engaging with the mounting arm and a resilient leg structure extending at right angles to the plate member and biasing the plate member to a central position and permitting the resilient displacement of the plate member in its own plane, the sensor means being arranged to monitor the displacements in a direction parallel to the plane of the plate.

Since the invention will normally be applied in a situation in which only small motions are monitored, references to planes and motion in planes (although representing an ideal situation) will not necessarily precisely describe the motion which in fact occurs. The motion which occurs in one embodiment is planar, but in other embodiments is over a small portion of a near-spherical surface, but for the small motions envisaged, these motions can be treated in practice as essentially planar motions and will be described in this specification as being planar.

In an embodiment of the invention according to the last-noted aspect, each sensor has a planar plate and motion is detected by a light emitting means and light detecting means.

Advantageously a data processing means collates the detected movements of the three sensor plates and produces a signal representative of the effort applied to the body of the apparatus, which may comprise translational motion, rotational motion or combinations thereof.

Embodiments of the invention will now be described by way of example only with reference to the accompanying drawings in which:-

FIGURE 1 is a schematic view of a first embodiment of the invention;

FIGURE 2 is a plan view of the first embodiment in practical form with the top of the spherical hand grip removed;

FIGURE 3 is a partially broken away side-view of the first embodiment with the top of the hand grip removed and the front portion of the arm structure in the middle region just above the central plane omitted;

FIGURE 4 is a perspective view illustrating the principles of a second embodiment in which the mounting structure is directed externally from the hand grip arrangement;

FIGURE 5 is a sectional elevational view of a practical embodiment corresponding to Figure 4 and looking along the Y direction at the device as seen in the X-Z plane;

FIGURE 6 is a plan view of the embodiment of Figure 5;

FIGURE 7 is an enlarged view of a preferred form of mounting for the respective legs of the embodiment of Figures 5 and 6;

FIGURE 8 is an elevation of the embodiment of Figure 7;

FIGURE 9 is an inverted plan view of the embodiment of Figure 7;

FIGURE 10 is a plan view of an alternative embodiment of connecting arm for use with the operator hand grip shown in Figures 12 and 13 and corresponding to the arms 33A, 33B and 33C of Figures 4 to 6;

FIGURE 11 is an elevation of the mounting arm of Figure 10;

FIGURE 12 is an axial cross-sectional elevation of a ball like operator's hand grip for use with mounting arms as in Figures 10 and 11 in an apparatus functioning in a manner equivalent to Figures 4 to 6; and

FIGURE 13 is an inverted plan view of the operator's grip shown in Figure 12.

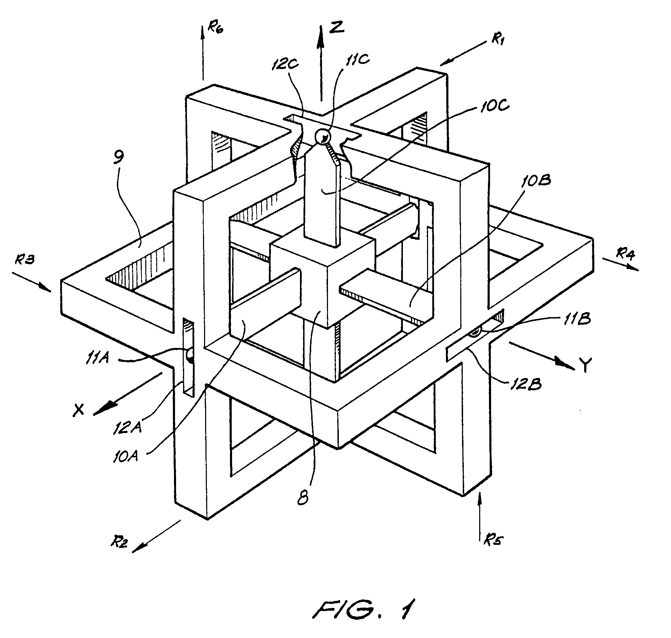

The theory behind the operation of the first embodiment can be more easily understood by referring to the schematic diagram of Figure 1 which illustrates an embodiment with the mounting arrangement internally disposed relative to an operator's hand grip. Three pairs of resiliently deformable connecting arms in the form of leaf-spring elements 10A, 10B and 10C are attached to a metal base 8 and extend in three mutually perpendicular planes; the centre lines of the leaf-spring elements intersect at the centre of the base 8, and extend respectively along X, Y and Z axes.

The leaf spring elements 10A, 10B and 10C are substantially of the same length and each leaf-spring element has at the end distant from the base 8, a ball-like tip 11A, 11B and 11C which lies within a respective slot 12A, 12B and 12C in a hand grip 9 represented by a frame. The frame forms a body to which forces in any direction and torques about any axis may be applied. Each slot provides constraint of the corresponding tip against movement relative to the grip in a direction perpendicular to the plane of the corresponding leaf spring. Thus, for example, a displacement force applied to the grip 9 along the Z axis causes bending of the leaf-springs 10B only and strain gauges (not shown) measure the bending so that a signal corresponding to the displacement force can be produced. Each tip has a freedom of motion relative to the grip 9 in the plane of the corresponding leaf-spring. Thus, displacement of the hand grip along the direction of elongation of a leaf-spring, or across the direction of the leaf spring does not result in any bending of the leaf-spring.

A displacement force at an angle to each of the axes is resolved into corresponding bending components in all leaf-spring elements.

Similarly, a torque applied to the hand grip is resolved into corresponding couples about the respective X, Y and Z axes. For example, torque about the Z axis causes equal and opposite bending of the leaf-springs 10A as the respective tip are deflected.

Forces applied along each of the axes and torques applied about each of the axes can be equated as follows:

$$F_X = R1 + R2 \quad\quad T_X = R5 - R6$$

$$F_Y = R3 + R4 \quad\quad T_Y = R1 - R2$$

$$F_Z = R5 + R6 \quad\quad T_Z = R3 - R4$$

where $F_I$ represents a force in the I direction, $T_I$ represents a torque about the I axis and R1 to R6 represent relative displacements in the directions indicated.

When a force is applied to the hand grip 9 in the X direction, there is a corresponding slight bending of one pair of leaf-spring elements 10C such that one element of the pair bends a distance equal to R1 and the other element bends a distance equal to R2. The resultant force in the X direction is thus given by Fx = R1 + R2.

Similarly, if a torque is applied about the Y axis, one of the leaf-springs of a leaf-spring pair 10C bends and produces a displacement of R1, while the other leaf-spring of the same pair bends and produces a displacement of R2 in the opposite direction. The resultant displacement about the Y axis is thus given by $T_Y$ = R1 - R2. The remaining forces and torques are calculated in a similar manner.

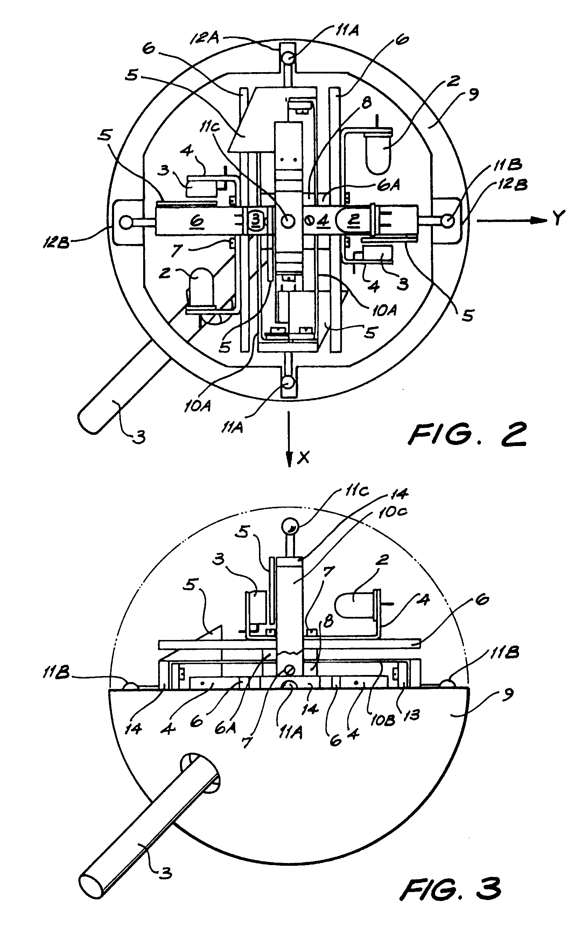

In practice an apparatus as shown in Figures 2 and 3 is used to implement the principles shown by the schematic diagram of Figure 1 in which like parts have been given like reference numerals. The sensing apparatus is supported by a fixed supporting rod 3 above a ground plane, the rod connecting to a central mounting block 8. A force or torque applied by an operator's hand placed on a spherical hand grip 9 is converted into its individual mutually perpendicular components by means of an optical detector. In this embodiment each of the X, Y and Z leaf-spring elements consists of a pair of flat resilient metal strips spaced apart and secured by screws 7 to opposite faces of the central cubic mounting block 8 and at their remote ends the strips are interconnected by a connector 13 having screws which also attaches an end fitting 14. The end fitting 14 has an axially extending shaft terminating in the ball like tip 11A, 11B or 11C.

In this embodiment, the optical detector associated with each leaf-spring comprises a light emitting diode (LED) 2 and a photodiode 3 fixedly mounted on a bracket 4. Each bracket is mounted on a respective mounting bar 6 secured by screws 7 to the central block 8, with a packing block 6A and the central part of the leaf spring element being sandwiched between the mounting bar 6 and the central block 8. A shutter 5 is attached to the end fitting 14 (which interconnects the leaf-spring metal strips) and thus movement of the shutter alters the extent to which the radiation of the LED 2 can fall on the photodiode 3. Thus displacement is determined by alteration of current in electrical circuitry. Each photodiode is connected through wiring for electronic circuitry where the necessary computation of force and torque takes place.

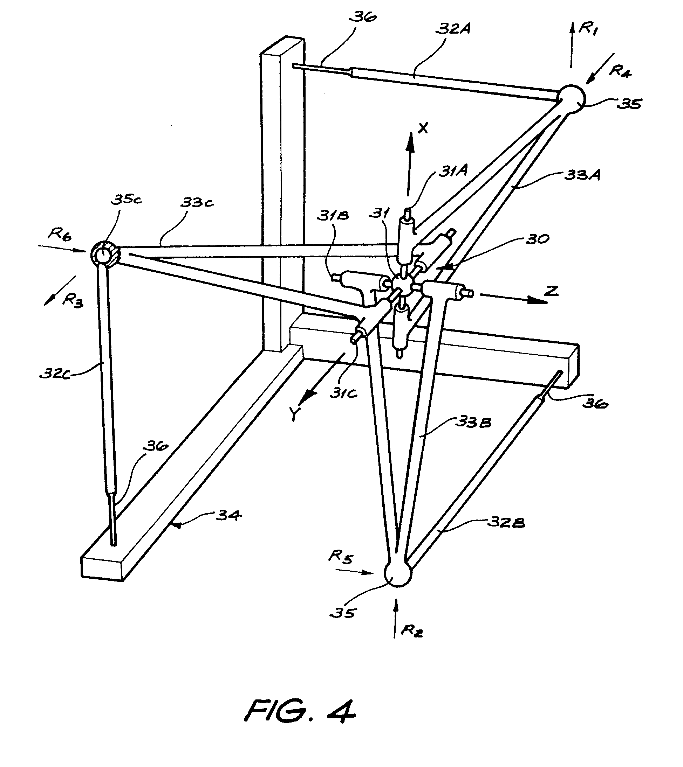

Referring to Figure 4, a second embodiment is shown wherein a hand grip 30 is represented by a mounting ball 31 to which shafts 31A, 31B, and 31C are affixed. The hand grip 30 is mounted through a set of three L-shaped mounting structures pivotally mounted on the respective mutually perpendicular shafts. The mounting structures comprise connecting members 33A, 33B and 33C and respective leg members 32A, 32B and 32C which connect the hand grip 30 to a base 34.

Each of the connecting members 33A, 33B and 33C is V-shaped and hingably connected to the corresponding shaft 31A, 31B and 31C for pivotal motion respectively about the X, Z and Y axes. Each of the connecting members is connected to a respective leg member 32A, 32B and 32C through a ball joint 35 at a respective remote connection point and which provides a limited range of universal relative motion. The base of each leg member is fixed to the base 34 and includes a narrow portion 36 near the base to provide a region of preferential bending. Each leg is of a spring metal material and has inherent resilience biasing the leg to the position shown in the drawing.

In use a force and or torque applied to the grip 30 results, in the general case, in a displacement of each of the respective mounting structures and in particular displacement at the respective ball joints 35 is detected. In a practical embodiment a detection plate assembly would be mounted near each ball joint to enable accurate measurements of deflection in a substantially planar surface perpendicular to the axis of the respective leg 32A, 32B or 32C. It can be shown that the force and torque components applied to the gripcan be calculated from the respective displacements by the following equations:

$$F_X = R1 + R2 \qquad T_X = -R3$$

$$F_Y = R3 + R4 \qquad T_Y = -R5$$

$$F_Z = R5 + R6 \qquad T_Z = -R1$$

where $F_I$ is a force applied in the I direction, $T_I$ is a torque applied about the I axis and R1 to R6 represent the relative displacements of each respective ball joint as shown in the drawing.

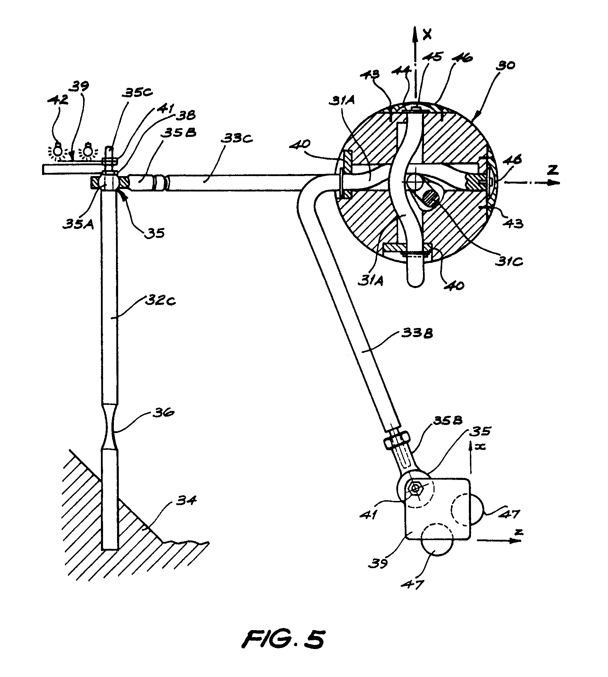

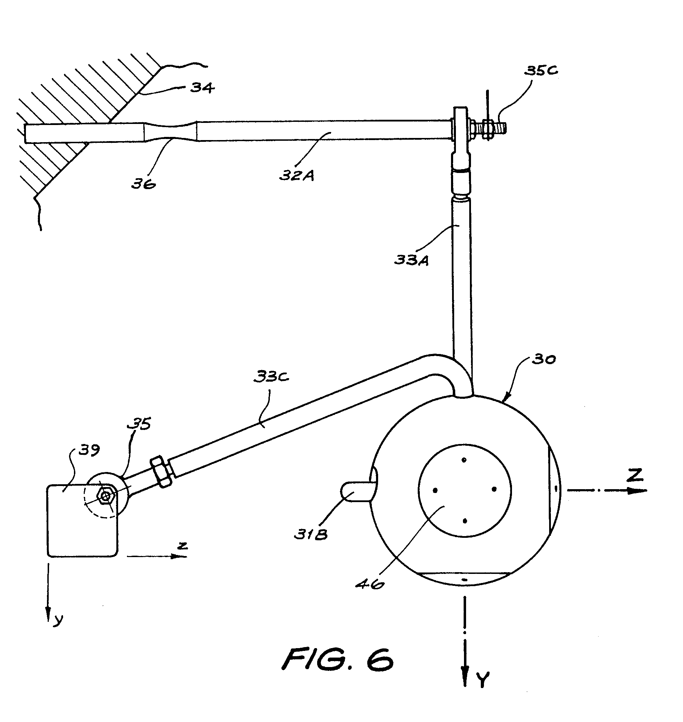

The schematic diagram shown in Figure 4 is useful for understanding the principles behind the operation of the second embodiment: however, a construction as shown in Figures 5 and 6 is a practical embodiment.

The complexities associated with the construction of the second embodiment can be more readily understood by considering one of its mutually perpendicular planes. Thus referring to Figure 5, an X-Z plane is shown with the Y axis perpendicular to the plane of the paper. The apparatus has corresponding construction and function when considered in either of the other two perpendicular planes. In the embodiment of Figures 5 and 6 the same reference numerals have been used for the parts corresponding to the structure shown in Figure 4.

Figure 5 is an axial section through the ball-like grip 30 which is adapted to fit comfortably in the operator's hand. The hinges represented by the mounting shafts 31A, 31B, 31C of Figure 4 are replaced by respective cranked cross-shafts 31A, 31B and 31C which extend from just one side of the ball grip 30 and comprise part of the respective arms 33A, 33B and 33C. The cranked profile of each shaft is to permit the three mutually perpendicular shafts to pass diametrically through the ball and to cross over one another thereby permitting the shafts to be rotatably mounted at each end at bearing points 40 within the ball grip. The free end of each shaft is secured by a screw 45 and washer 44, a part spherical cap 46 being secured over the free end of the shaft by screws 43.

Each ball joint 35 comprises a part-spherical ball member 35A mounted on the leg 32A, 32B and 32C with a corresponding tip element 35B (with a part-spherical cavity) mounted on the end of the respective arms 33A, 33B and 33C. A screw threaded extension 35C extends beyond the ball joint from the leg and the ball joint is assembled by a first securing nut 38. A sensor assembly 39 is then fixed on the screw threaded extension and secured in place by a second nut 41.

The sensor plate assembly 39 mounted on the end of arm 33B extends generally in the X-Z plane. The sensor plate 39 is of opaque material and is adapted to interrupt to a variable and partial extent the passage of light from light sources 42 which are directed towards light dependant resistors 47.

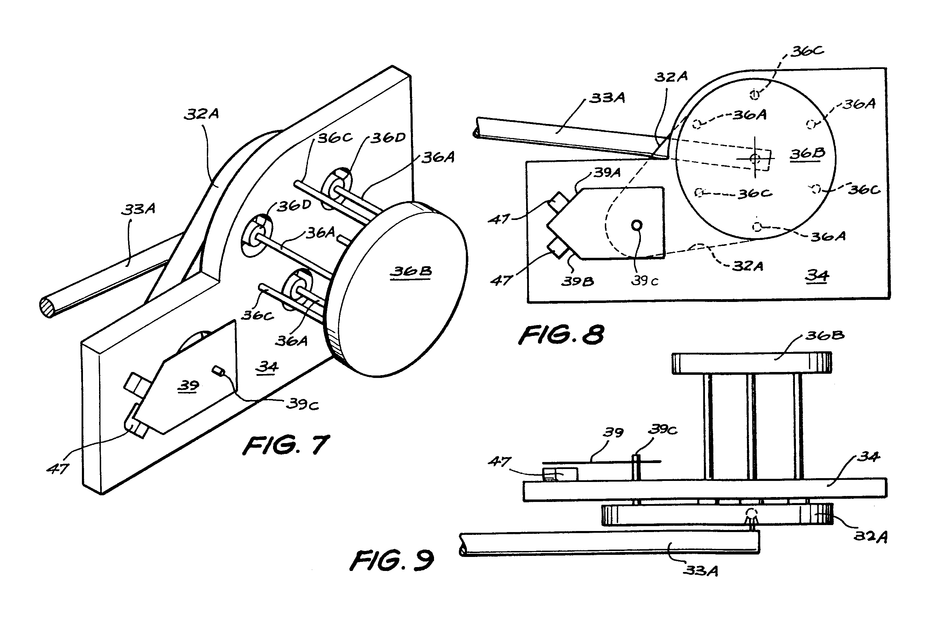

Reference will now be made to Figure 7 to 9 which show a preferred and alternative mounting arrangement for the respective legs of the embodiment of Figures 4 to 6. One mounting unit is shown in each of Figures 7 to 9 and has the general feature of providing true displacement in a plane, whereas in the arrangement of Figures 4 to 6 the displacement is in a very small arc of a sphere and is thus not true planar motion and very small errors are introduced into the results obtained.

In Figures 7 to 9 the parts for mounting the ball grip corresponding to leg-arm combination 32A, 33A are shown; like reference numerals are used for like parts.

A rigid base plate 34 is adapted to be fixed to a rigid mount so as not to move in space. The mounting arm 33A is pivotally connected to the hand grip (not shown) and is connected to the base plate 34 through a resiliently displacable mounting leg arrangement; the arm has a ball joint including a ball 35A extending from the arm 33A and engaged in a seat of the mounting leg arrangment. This leg arrangement comprises a generally pear-shaped rigid plate 32A providing a seat for the ball 35A, a first set of spring legs 36A, a rigid connecting disk 36B and secondary spring legs 36C extending parallel to the first set of legs and connected to the base 34. The respective sets of legs are alternately spaced equally around a circular path and thus form essentially a complex spring structure. Any motion of the mounting arm 33A in a plane parallel to the plate 32A causes the three spring legs 36A to be bent resiliently into a shallow S-shape, reaction occurs through the disk 36B, and the secondary legs 36C bend resiliently into a corresponding S-shape bent in the opposite direction. Thus, an applied force to the hand grip 30 causing displacement of the arm 33A in the relevant plane causes motion of the plate 32A and thus motion of an attached shutter 39 in a parallel plane thereto. Displacement is detected by the degree of interruption of a light source (not shown) inpinging on photodiodes 47.

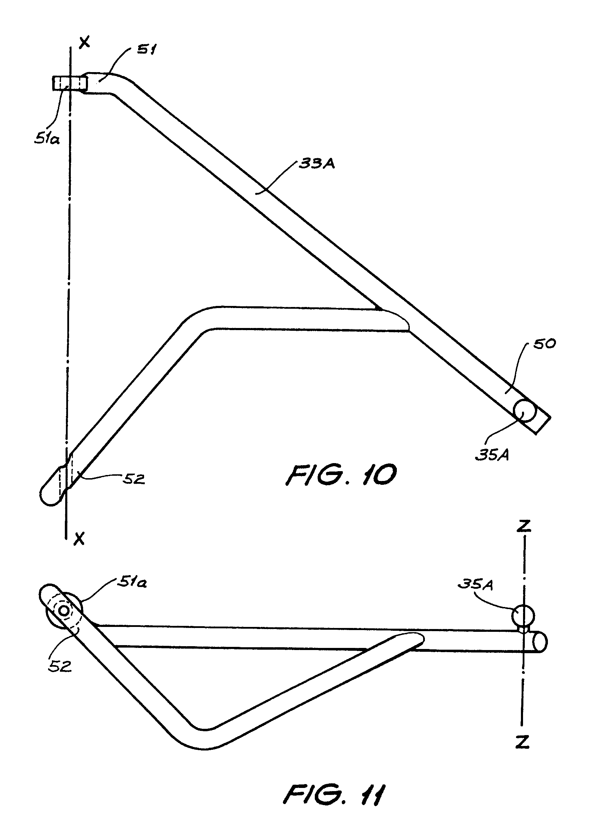

From Figure 8 it will be seen that the shutter 39 has operating edges 39a and 39b extending at right angles so that displacement in the plane is resolved in two components. The shutter is mounted on a mounting shaft 39c extending from the pear-shaped plate 32A through an aperture in the rigid base 34, the rigid base carrying the photodiodes.

Figure 7 shows most clearly respective bosses 36D through which the resilient legs 36A extend, these bosses extending into respective apertures in the base 34. Any excessive movement of the arm 33A causes one or more of the bosses to abut the wall of the corresponding aperture thereby providing a limit to movement.

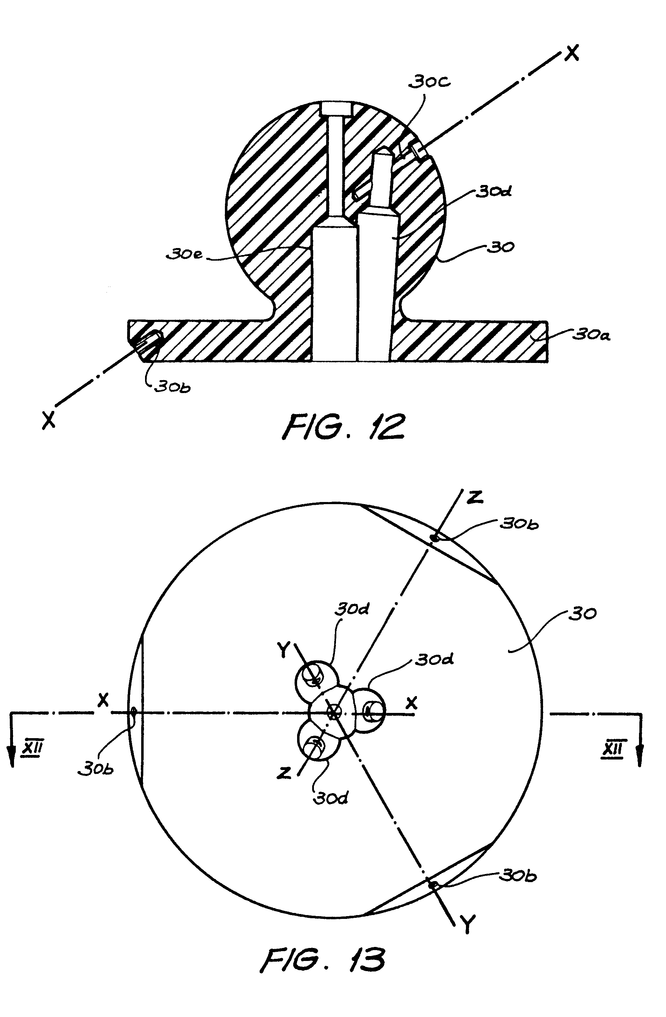

An alternative and advantageous embodiment is a variation on that of Figures 4 to 6 and wherein the mounting arm is formed as shown in Figures 10 and 11 and the hand grip is as formed in Figures 12 and 13. The operating principles are the same, but the construction has advantages.

As shown in Figures 10 and 11, the mounting arm referenced 33A has a generally Y-shaped physical form having respective ends 50, 51 and 52. End 50 has, extending laterally therefrom, the ball 35A for connection to the mounting leg (or plate 32A as shown in Figure 9). End 51 terminates in a sleeve like tip 51a with an aperture extending therethrough (along the X axis) and aligned with a small bore extending obliquely through the tip region of the arm 52.

The hand grip shown in Figures 12 and 13 is of plastics material and has a spherical ball-shaped head and a circular base plate 30a, and is adapted to be connected to a set of three arms of the type shown in Figures 10 and 11. The base plate 30a has a series of three spaced inclined bores 30b extending from chamfered surfaces and respectively along X, Y and Z axes of the apparatus. A series of three axially aligned corresponding bores 30c are provided in the top portion of the spherical head. Figure 12 shows a section along the X axis. The arm end 51 of the mounting arm of Figure 10 and 11 is secured by a bolt to the tapped bore 30b and the end 52 of the arm is inserted through a corresponding interior bore 30d in the spherical head so that the tip of the arm has its oblique bore aligning with the bore 30c for accommodating a securing pin. The pin is threadably engaged in the bore 30c, but is a sliding fit in the oblique bore in the arm end 52.

Thus, the mounting arm has a limited freedom to rotate about the X axis at its connection with the ball-shaped head and freedom about the Z-axis at its connection with the mounting leg arrangement, as conceptually shown in Figure 4. Therefore, any displacement force on the ball-shaped head and along the X axis or a torque about the X axis results in no displacement of mounting leg 32A associated with arm 33A but in either case the other mounting legs may be displaced and thus the motion detected. The ball shaped head includes a central interior bore 30e for clearance purposes for the respective arm ends 52.

The invention can be applied to the control of an industrial robot, whereby pushing and twisting motions of the operator's hand on the grip 30 causes corresponding motions at the respective sensor plate assembly and by computation in accordance with the above equations the applied forces and torques can be determined. This permits corresponding motion to be controlled in the robot.

A further advantageous application of the present invention, in general, exploits the ability of embodiments of the invention to detect and measure force and/or torque applied relative to two parts. An illustrative example is the case of a connection between two aircraft flying in formation and connected by a refueling device. The invention could be incorporated in a coupling whereby the relative applied translational forces and torques between the two aircraft are detected and monitored and indeed in a sophisticated application this might cause the control systems of the aircraft to automatically compensate as may be necessary to keep the applied forces and torques within allowable ranges.

## Claims

1. Apparatus for providing command signals comprising a body (9) to which forces in any directions and torques about any axis may be applied, a fixed base (8) carrying respective pairs of resiliently deformable connecting arms (10A,B) each said pair extending away from the base (8) along a different one of three mutually perpendicular axes, herein referred to as the X, Y and Z axes, extending in respective directions herein referred to as the X, Y and Z directions, said arms being slidably seated in the body (9), and sensor means (5,2,3) arranged in a substantially symmetric at least two dimensional array for sensing displacement of each connecting arm (10A,B) whereby the nature of the applied force and torque in respect of at least two of said axes may be determined and corresponding output signals provided.

2. Apparatus according to claim 1 wherein the fixed base (8) carries three said pairs of resiliently deformable connecting arms (10A, B) said pairs extending respectively in the X, Y and Z directions, said array of sensor means (5, 2, 3,) including sensor means for sensing displacement of each connecting arm (10A, B) perpendicular to the respective direction (X, Y, Z) along which the arm extends, whereby the nature of the applied force and torque in respect of all three of said reference axes (X, Y and Z) may be determined and corresponding output signals provided.

3. Apparatus according to claim 2 wherein a respective sensor is associated with each of said arms (10C) extending in the Z direction to detect displacements of the respective arms (10C) in the X direction, and provide corresponding output signals and wherein a respective sensor is associated with each of said arms (10B) extending in the Y direction to detect displacements of the respective arms (10B) in the Z direction and provide corresponding output signals, the sensors associated with the arms (10C) extending in the Z direction serving to detect translational forces applied to said body, relative to said base, along the X axis and torques applied to said body, relative to said base, about the Y axis, and the sensors associated with the arms (10B) extending in the Y direction serving to detect translational forces applied to said body, relative to said base, along the Z axis and torques applied to said body, relative to said base, about the X axis.

4. Apparatus according to claim 3, wherein a respective sensor is associated with each of said arms (10A) extending in the X direction to detect displacements of the respective arms (10A) in the Y direction and provide corresponding output signals and wherein the sensors associated with the arms (10A) extending in the X direction serve to detect translational forces applied to said body, relative to said base, along the Y axis and torques applied to said body, relative to said base, about the Z axis.

5. Apparatus as claimed in claim 3 or claim 4, and wherein the body (9) comprises a housing member (9) having a portion of the fixed base (8) generally centrally disposed therein with a mounting arm (3) of the fixed base extending out through the housing, and the resiliently deformable connecting arms (10A, 10B, 10C) extending along the respective X, Y and Z axes from the fixed base portion (8) to engage with the housing at respective locations, each of the connecting arms having a ball-like tip (11A, 11B, 11C) engaging in a corresponding slot (12A, 12B, 12C) in the housing, the slots (12A) receiving the tips (11A) of the arms (10A) extending in the X direction being so oriented as to allow movement of the last mentioned tips (11A) in the X and Z directions, but not in the Y direction, the slots (12B) receiving the tips (11B) of the arms (10B) extending in the Y direction being so oriented as to allow movement of the last-mentioned tips (11B) in the Y and X directions, but not in the Z direction and the slots (12C) receiving the tips (11C) of the arms (10C) extending in the Z direction being so oriented as to allow movement of the last-mentioned tips (11C) in the Z and Y directions, but not in the X direction, whereby the sensors associated with each of said arms is sensitive only to displacement of the respective arm accompanied by resilient deformation of the respective arm of which the tip is constrained by the slot receiving the same.

6. Apparatus as claimed in claim 5, wherein each of the connecting arms (10A, 10B, 10C) is of spring strip-like material, the strips extending in the X, Y and Z directions having their respective planes at right angles to one another.

7. Apparatus as claimed in claim 7, and wherein each said sensor includes a shutter element (5) disposed normally to interrupt partially a beam of electromagnetic radiation from a source (2) to an electronic device (3) sensitive to such radiation, which device (3) is adapted to be connected into a circuit, the electrical characteristics of the device (3) varying depending upon the amount of electromagnetic radiation incident thereon and thus corresponding to the position of the shutter element (5).

8. Apparatus for providing command signals comprising a body (30) to which forces in any directions and torques about any axis may be applied, connecting members (33A,B) attached to the body (30) and each having a respective remote connection point (35), said connecting members (33A, 33B) extending away from the body (30) such that in a central position of the body (30) said remote connection points (35) on the connecting members (33A, B) lie on different ones of three mutually perpendicular reference axes (X,Y,Z) extending from a central point of the body (30), each of the connecting members (33A, B) being connected to the body (30) so as to be pivotable around a different one of the reference axes (X,Y,Z), respective leg means (32A,B) being fixed to the fixed base (34) and pivotally connected to the respective connecting members (33A, B) at the connection points (35) through universal joints of at least limited range and motion, biasing means (36) being provided to bias the connecting members (33A, B) towards the central point, and sensor means (39, 42, 47) arranged in a substantially symmetric at least two dimensional array for sensing displacement of each connecting member (33A, B) and/or each leg means (32A,B) whereby the nature of the applied force and torque in respect of at least two said reference axes may be determined and a corresponding output signal provided.

9. Apparatus as claimed in claim 8 including three said connecting members attached to the body 30, pivotable about respective ones of said reference axes (X,Y,Z) and having said connecting points (35) thereof lying on respective ones of said reference axes.

10. Apparatus as claimed in claim 8 or claim 9 wherein the body further comprises a ball-like element (30) and each connecting arm (33A, 33B, 33C) is a cranked arm having a minor portion mounting the arm on the body (30) about a pivotal axis extending at right angles to the operating axis (X, Y, Z) applicable to that arm and a major portion extending from a peripheral portion of the ball-like element (30) to the universal joint (35) and at an angle to the operating axis.

11. Apparatus as claimed in claim 8 or claim 9 wherein each mounting arm (33A, 33B, 33C) is of a generally Y-shaped form and has a member (35A) extending transversely from one end portion for forming the universal joint (35) connection with the associated leg, and the remote ends of the other arms have respective cross bores (51) which are coaxial for pivotal attachment through elongated fixing elements to the body (30), the body being of ball-like form and having an outwardly extending flanged base (30a) and the other arm (52) being inserted within the bore (30d) within the ball-like body, the axes of the cross bores in the respective Y-shaped arms being located on the X, Y and Z axes of the apparatus, and the axes intersecting at the centre of the ball-like body.

12. Apparatus as claimed in any one of claims 8 to 11, wherein each of the legs is in the form of a resilient connecting structure comprising a plate member (32A) forming a universal joint member for engaging with the mounting arm (33A, 33B, 33C) and a resilient leg structure (36A, 36B, 36C) extending at right angles to the plate member (32A) and biasing the plate member to a central position and permitting the resilient displacement of the plate member in its own plane, the sensor means (39, 47) being arranged to monitor the displacements in a direction parallel to the plane of the plate.

13. Apparatus as claimed in claim 12 and wherein each of said resilient connecting structures comprises a rigid base member (34) adapted to be fixed in space and forming at least part of said base of the apparatus, a rigid connector (36B), and an array of resilient pins spaced normally parallel to one another and located spaced around an axis extending from the rigid base member and substantially at right angles thereto, the pins comprising a first set (36C) of at least 3 pins fixed to the rigid base member (34) and fixed to the rigid connector (36B), and a second set (36A) of at least 3 pins extending from the rigid connector through respective apertures in the rigid base (34) member to be connected to said plate member (32A).

14. Apparatus as claimed in claim 11 and wherein each of the legs is in the form of a resilient connecting structure comprising a plate member (32A, 32B, 32C) forming a universal joint member for engaging with the mounting arm (33A, 33B, 33C), and a resilient leg structure (36A, 36B, 36C) extending at right angles to the plate member (32A) and biasing the plate member to a central position and permitting the resilient displacement of the plate member in its own plane, the sensor means (47, 39, 39C) being arranged to monitor the displacements in a direction parallel to the plane of the plate.

15. An apparatus as claimed in any one of claims 8 to 14, wherein each of said sensor means comprises a light emitting means (2) and a light detecting means (3) axially aligned substantially at right angles to the respective axis and a control mask connected to the respective connecting members (33A, 33B, 33C) and operable to vary the degree of interruption of light onto the light detecting means whereby the magnitude of the output signal is usable in determining the applied torque and/or applied force.

16. An apparatus as claimed in claim 3 and wherein said array of sensor means comprises six sensor means (2 and 3), each of the sensor means being mounted with a respective limitation of response with regard to displacement responsive to any applied torque or force, the first of said sensor means responding to displacement in the X direction but not responding to displacement in the Y or Z directions, the second sensor means responding to displacement in the Y direction but not to displacement in the X or Z directions and the third sensor means responding to displacement in the Z direction but not to displacement in the X or Y directions.

17. An apparatus as claimed in claim 16 wherein each sensor means comprises a shutter element (5), means producing a beam of electromagnetic radiation (2) a detecting means aligned with the beam for detecting electromagnetic radiation and providing a signal corresponding to the incident radiation, the shutter element being mounted normally to interrupt partially the beam and responsive to displacement produced as a component of an applied torque and/or applied force to vary the amount of the beam incident on the detecting means.

18. Apparatus as claimed in claim 16 or claim 17 and wherein the body (9) comprises a housing substantially surrounding the base (8), the base having a mounting stem (3) protruding from the housing to mount the apparatus.

**Patentansprüche**

1. Vorrichtung zum Liefern von Führungssignalen mit einem Grundkörper (9), auf den Kräfte in beliebigen Richtungen und Momente um beliebige Achsen ausgeübt werden können, einem festem Sockel (8), der Paare von elastisch verformbaren Verbindungsarmen (10A, B) trägt, wobei sich jedes besagte Paar vom Sokkel (8) weg erstreckt längs einer anderen von drei aufeinander senkrecht stehenden Achsen, hier als X-, Y-und Z-Achse bezeichnet, die sich in Richtungen erstrecken, die hier als die X-, Y- und Z-Richtung bezeichnet sind, wobei besagte Arme verschiebbar im Grundkörper (9) gelagert sind, und wobei Sensormittel (5, 2, 3) in einem im wesentlichen symmetrischen, wenigstens zweidimensionalen Feld zur Erfassung einer Versetzung eines jeden Verbindungsarms (10A, B) angeordnet sind, wodurch das Wesen der aufgebrachten Kraft und des Moments in Hinsicht auf wenigstens zwei der besagten Achsen bestimmt werden kann und entsprechende Ausgangssignale geliefert werden können.

2. Vorrichtung nach Anspruch 1, dadurch gekennzeichnet, daß der feste Sockel (8) drei der besagten Paare elastisch verformbarer Verbindungsarme (10A, B) trägt, die besagten Paare sich in X-, Y- und Z-Richtung erstrecken, besagtes Feld von Sensormitteln (5, 2, 3) Sensormittel zum Erfassen einer Versetzung eines jeden Verbindungsarms (10A, B) senkrecht zur jeweiligen Richtung (X, Y, Z) einschließt, in der sich der Arm erstreckt, wodurch das Wesen der aufgebrachten Kraft und des Moments hinsichtlich aller drei besagter Bezugsachsen (X, Y und Z) bestimmt werden kann und entsprechende Ausgangssignale geliefert werden können.

3. Vorrichtung nach Anspruch 2, dadurch gekennzeichnet, daß jeweils ein Sensor jedem der besagten, sich in der Z-Richtung erstreckenden Arme (10C) zugeordnet ist, um Versetzungen der Arme (10C) in der X-Richtung festzustellen und entsprechende Ausgangssignale zu liefern, und daß jeweils ein Sensor jedem der sich in der besagten Y-Richtung erstreckenden Arme (10B) zugeordnet ist, um Versetzungen der Arme (10B) in Z-Richtung festzustellen und entsprechende Ausgangssignale zu liefern, wobei die den sich in Z-Richtung erstreckenden Armen (10C) zugeordneten Sensoren dazu dienen, Translationskräfte, die auf den besagten Grundkörper relativ zu besagtem Sockel längs der X-Achse ausgeübt werden und Momente, die auf den besagten Grundkörper relativ zu besagten Sockel um die Y-Achse ausgeübt werden, festzustellen, und wobei die den sich in X-Richtung erstreckenden Armen (10B) zugeordneten Sensoren dazu dienen, Translationskräfte, die auf den besagten Grundkörper relativ zu besagtem Sockel längs der Z-Achse und Momente, die auf den besagten Grundkörper relativ zu besagtem Sockel um die X-Achse ausübt werden, festzustellen.

4. Vorrichtung nach Anspruch 3, dadurch gekennzeichnet, daß jeweils ein Sensor jedem der besagten, sich in X-Richtung erstreckenden Arme (10A) zugeordnet ist, um Versetzungen der entsprechenden Arme (10A) in Y-Richtung festzustellen und entsprechende Ausgangssignale zu liefern, und daß die den sich in X-Richtung erstreckenden Armen (10A) zugeordneten Sensoren dazu dienen, auf den besagten Grundkörper relativ zu besagtem Sockel längs der Y-Achse ausgeübte Translationskräfte und auf den besagten Grundkörper relativ zu besagtem Sockel um die Z-Achse ausgeübte Momente festzustellen.

5. Vorrichtung nach Anspruch 3 oder 4, dadurch gekennzeichnet, daß der Grundkörper (9) ein Gehäuseteil (9) umfaßt, wobei ein Abschnitt des festen Sockels (8) im allgemeinen zentral darin angeordnet ist und ein Befestigungsarm (3) des festen Sockels sich nach außen durch das Gehäuse erstreckt und die elastisch verformbaren Verbindungsarme (10A, 10B, 10C) sich längs der X-, Y- und Z-Achse von dem festen Sockelabschnitt (8) aus erstrecken, um an jeweiligen Stellen in das Gehäuse einzugreifen, wobei jeder der Verbindungsarme eine kugelartige Spitze (11A, 11B, 11C) hat, die in einen entsprechenden Schlitz (12A, 12B, 12C) im Gehäuse eingreift, und wobei die die Spitzen (11A) der sich in X-Richtung erstreckenden Arme (10A) aufnehmenden Schlitze (12A) so ausgerichtet sind, daß sie eine Bewegung der letztgenannten Spitzen (11A) in X- und Z-Richtung zulassen, aber nicht in Y-Richtung, die die Spitzen (11B) der sich in Y-Richtung erstreckenden Arme (10B) aufnehmenden Schlitze (12B) so ausgerichtet sind, daß sie eine Bewegung der letztgenannten Spitzen (11B) in Y- und X-Richtung zulassen, aber nicht in Z-Richtung und die die Spitzen (11C) der sich in Z-Richtung erstreckenden Arme (10C) aufnehmenden Schlitze (12C) so ausgerichtet sind, daß sie eine Bewegung der letztgenannten Spitzen (11C) in der Z- und Y-Richtung zulassen, aber nicht in der X-Richtung, wodurch die jedem der besagten Arme zugeordneten Sensoren nur hinsichtlich einer Versetzung des jeweiligen Arms empfindlich, welche mit einer elastischen Verformung des Arms, dessen Spitze durch den ihn aufnehmenden Schlitz eine Zwangsbedingung erfährt, einhergeht.

6. Vorrichtung nach Anspruch 5, dadurch gekennzeichnet, daß jeder Verbindungsarm (10A, 10B, 10C) aus streifenartigem Federmaterial besteht, wobei sich die Streifen in X-, Y- und Z-Richtung erstrecken und ihre jeweiligen Ebenen in rechten Winkeln zueinander haben.

7. Vorrichtung nach Anspruch 6, dadurch gekennzeichnet, daß jeder der besagten Sensoren ein Verschlußelement (5) aufweist, das normalerweise angeordnet ist, um einen Strahl elektromagnetischer Strahlung von einer Quelle (2) zu einem für solche Strahlung empfindlichen, elektronischen Gerät (3) teilweise zu unterbrechen, welches Gerät (3) dazu bestimmt ist, in einen Schaltkreis eingegliedert zu werden, wobei sich die elektrischen Eigenschaften des Geräts (3) in Abhängigkeit von der Menge der darauf fallenden elektromagnetischen Strahlung verändern und somit der Stellung des Verschlußelements (5) entsprechen.

8. Vorrichtung zum Liefern von Führungssignalen mit einem Grundkörper (30), auf den Kräfte in beliebigen Richtungen und Momente um beliebige Achsen ausgeübt werden können, wobei Verbindungsteile (33A, B) am Grundkörper (30) befestigt sind und jedes jeweils einen abseits liegenden Verbindungspunkt (35) hat, wobei sich die Verbindungsteile (33A, 33B) vom Grundkörper (30) wegerstrecken, so daß die besagten abseits liegenden Verbindungspunkte (35) auf den Verbindungsteilen (33A, B) in einer zentralen Stellung des Grundkörpers (30) auf verschiedenen der drei jeweils aufeinander senkrechten Bezugsachsen (X, Y, Z) liegen, die sich von einem zentralen Punkt des Grundkörpers (30) aus erstrecken, wobei jedes der Verbindungsteile (33A, B) mit dem Grundkörper (30) verbunden ist, so daß es jeweils um eine andere der Bezugsachsen (x, Y, Z) schwenkbar ist, wobei jeweils ein Stützmittel (32A, B) am festen Sockel (34) befestigt und an den Verbindungs- punkten (35) durch universelle Anschlüsse von zumindest begrenztem Bereich und Bewegung schwenkbar mit den jeweiligen Verbindungsteilen (33A, B) verbunden ist, wobei ein Vorspannmittel (36) die Verbindungsteile (33A, B) in Richtung auf den zentralen Punkt vorspannt, und Sensormittel (39, 42, 47) in einem im wesentlichen symmetrischen, wenigstens zweidimensionalen Feld angeordnet sind, um eine Versetzung jedes der Verbindungsteile (33A, B) und/oder jedes der Stützmittel (32A, B) zu erfassen, wodurch das Wesen der ausgeübten Kraft und des Moments hinsichtlich wenigstens zweier besagter Bezugsachsen bestimmt und ein entsprechendes Ausgangssignal geliefert werden kann.

9. Vorrichtung nach Anspruch 8, dadurch gekennzeichnet, daß drei besagte Verbindungsteile am Grundkörper (30) befestigt sind, die jeweils um eine der besagten Bezugsachsen (X, Y, Z) schwenkbar sind und deren besagte Befestigungspunkte (35) auf jeweils einer der besagten Bezugsachsen liegen.

10. Vorrichtung nach Anspruch 8 oder 9, dadurch gekennzeichnet, daß der Grundkörper weiter ein kugelartiges Element (30) aufweist und jeder Verbindungsarm (33A, 33B, 33C) ein gekröpfter Arm ist, von dem ein kleinerer Abschnitt den Arm am Grundkörper (30) um eine Schwenkachse befestigt, die sich unter rechten Winkeln zur Arbeitsachse (X, Y, Z) erstreckt, die auf diesen Arm anwendbar ist, und von dem ein größerer Abschnitt sich von einem Umfangsabschnitt des kugelartigen Elements (30) zum universellen Anschluß (35) und unter einem Winkel zur Arbeitsachse erstreckt.

11. Vorrichtung nach Anspruch 8 oder 9, dadurch gekennzeichnet, daß jeder Befestigungsarm (33A, 33B, 33C) im allgemeinen Y-förmig ist und ein Teil (35A) hat, das sich quer von einem Endabschnitt aus erstreckt, um die universelle Anschlußverbindung (35) mit der zugeordneten Stütze zu bilden, und die abseits liegenden Enden der anderen Arme jeweils Querbohrungen (51) haben, die zur schwenkbaren Befestigung am Grundkörper (30) durch längliche Befestigungselemente koaxial sind, wobei der Grundkörper von kugelartiger Form ist und einen sich nach außen erstreckenden, flanschartigen Sockel (30a) hat und der andere Arm (52) in die Bohrung (30d) innerhalb des kugelartigen Grundkörpers eingesetzt ist, und wobei die Achsen der Querbohrungen in den jeweiligen Y-förmigen Armen auf der X-, Y- und Z-Achse der Vorrichtung angeordnet sind und die Achsen sich im Mittelpunkt des kugelartigen Grundkörpers schneiden.

12. Vorrichtung nach einem der Ansprüche 8 bis 11, dadurch gekennzeichnet, daß jede der Stützen die Form eines federnd Verbindungsaufbaus hat, der ein Plattenteil (32A) umfaßt, das ein universelles Anschlußteil zum Eingreifen mit dem Befestigungsarm (33A, 33B, 33C) bildet, und einen federnden Stützaufbau (36A, 36B, 36C), der sich unter rechten Winkeln zum Plattenteil (32A) erstreckt und das Plattenteil in Richtung auf eine zentrale Stellung vorspannt und die federnde Versetzung des Plattenteils in seiner eigenen Ebene zuläßt, wobei die Sensormittel (39, 47) angeordnet sind, um die Versetzungen in einer Richtung parallel zu der Ebene der Platte zu überwachen.

13. Vorrichtung nach Anspruch 12, dadurch gekennzeichnet, daß jeder besagte, federnde Verbindungsaufbau ein starres Grundteil (34) aufweist, das dazu bestimmt ist, im Raum befestigt zu werden und das zumindest einen Teil des besagten Sockels der Vorrichtung bildet, einen starren Verbinder (36B), und ein Feld federnder Zapfen, die normalerweise parallel zueinander einen Abstand aufweisen und mit Abstand um eine Achse herum, die sich vom starren Sockelteil aus erstreckt und im wesentlichen unter rechten Winkeln dazu angeordnet ist, wobei die Zapfen einen ersten Satz (36C) von wenigstens 3 Zapfen umfassen, die mit dem starren Sockelteil (34) fest verbunden sind und mit dem starren Verbinder (36B) fest verbunden sind, und eine zweiten Satz (36A) von wenigstens 3 Zapfen, die sich von dem starren Verbinder durch Öffnungen im starren Sockelteil (34) erstrecken, um mit dem besagten Plattenteil (32A) verbunden zu werden.

14. Vorrichtung nach Anspruch 11, dadurch gekennzeichnet, daß jede der Stützen die Form eines federnden Verbindungsaufbaus hat, der ein Plattenteil (32A, 32B, 32C) umfaßt, das ein universelles Anschlußteil zum Eingreifen mit dem Befestigungsarm (33A, 33B, 33C) bildet, und einen federnden Stützaufbau (36A, 36B, 36C), der sich unter rechten Winkeln zum Plattenteil (32A) erstreckt und das Plattenteil in Richtung auf eine zentrale Stellung vorspannt und die federnde Versetzung des Plattenteils in seiner eigenen Ebene zuläßt, wobei die Sensormittel (47, 39, 39C) angeordnet sind, um die Versetzungen in einer Richtung parallel zu der Ebene der Platte zu überwachen.

15. Vorrichtung nach einem der Ansprüche 8 bis 14, dadurch gekennzeichnet, daß jedes der besagten Sensormittel ein Licht aussendendes Mittel (2) und ein Licht erkennendes Mittel (3) aufweist, die im wesentlichen unter rechten Winkeln zur jeweiligen Achse fluchten, und eine Steuermaske, die mit den jeweiligen Verbindungteilen (33A, 33B, 33C) verbunden ist und bedienbar ist, um den Grad der Unterbrechung des Lichts auf das Licht erkennende Mittel zu verändern, wodurch die Größe des Ausgangssignals verwendbar ist, um das ausgeübte Drehmoment und/die ausgeübte Kraft zu bestimmen.

**16.** Vorrichtung nach Anspruch 3, dadurch gekennzeichnet, daß das besagte Feld von Sensormitteln 6 Sensormittel (2 und 3) umfaßt, wobei jedes der Sensormittel mit einer jeweiligen Begrenzung des Ansprechvermögens hinsichtlich der Versetzung entsprechend einem beliebigen ausgeübten Drehmoment oder Kraft montiert ist, wobei das erste der besagten Sensormittel auf eine Versetzung in der X-Richtung anspricht, aber nicht auf eine Versetzung in Y- oder Z-Richtung, das zweite Sensormittel auf eine Versetzung in Y-Richtung anspricht, aber nicht auf eine Versetzung in X-oder Z-Richtung und das dritte Sensormittel auf eine Versetzung in Z-Richtung anspricht, aber nicht auf eine Versetzung in X- oder Y-Richtung.

**17.** Vorrichtung nach Anspruch 16, dadurch gekennzeichnet, daß jedes Sensormittel ein Verschlußelement (5) umfaßt, ein Mittel zum Erzeugen eines Strahls elektromagnetischer Strahlung (2), ein mit dem Strahl ausgerichtetes Erkennungsmittel zum Feststellen elektromagnetischer Strahlung und Liefern eines der einfallenden Strahlung entsprechenden Signals, wobei das Verschlußelement normalerweise montiert ist, um den Strahl teilweise zu unterbrechen und um, entsprechend einer als eine Komponente eines ausgeübten Drehmoments und/oder einer ausgeübten Kraft erzeugten Versetzung, die Menge des auf das Erkennungsmittel einfallenden Strahls zu verändern.

**18.** Vorrichtung nach Anspruch 16 oder 17, dadurch gekennzeichnet, daß der Grundkörper (9) ein Gehäuse umfaßt, das im wesentlichen den Sockel (8) umgibt, wobei der Sockel einen Montageschaft (3) hat, der vom Gehäuse vorsteht, um die Vorrichtung zu montieren.

**Revendications**

**1.** Appareil destiné à transmettre des signaux de commande, comprenant un corps (9) auquel peuvent être appliqués des forces ayant des directions quelconques et des couples autour d'un axe quelconque, une base fixe (8) portant des paires respectives de bras (10A, 10B) de raccordement qui Sont élastiquement déformables, chaque paire partant de la base (8) le long d'un axe différent parmi trois axes perpendiculaires les uns aux autres, appelés axes X, Y et Z, disposés dans des directions respectives appelées directions X, Y et Z, les bras étant disposés dans un siège formé dans le corps (9) et dans lequel ils peuvent coulisser, et des dispositifs capteurs (5, 2, 3) formant une disposition sensiblement symétrique au moins bidimensionnelle pour la détection du déplacement de chaque bras de raccordement (10A, 10B), si bien que la nature de la force appliquée et du couple appliqué par rapport à deux des axes au moins peut être déterminée et des signaux correspondants de sortie peuvent être formés.

**2.** Appareil selon la revendication 1, dans lequel la base fixe (8) porte trois paires de bras de raccordement (10A, 10B) qui sont élastiquement déformables, les paires étant disposées respectivement dans les directions X, Y et Z, l'ensemble des dispositifs capteurs (5, 2, 3) comprenant un dispositif capteur destiné à détecter le déplacement de chaque bras de raccordement (10A, 10B) perpendiculairement à la direction respective (X, Y, Z) le long de laquelle est disposé le bras, si bien que la nature de la force appliquée et du couple appliqué pour les trois axes de référence (X, Y et Z) peut être déterminée et des signaux correspondants de sortie peuvent être transmis.

**3.** Appareil selon la revendication 2, dans lequel un capteur respectif est associé à chacun des bras (10C) placés dans la direction Z pour la détection des déplacements des bras respectifs (10C) dans la direction X, et donne des signaux correspondants de sortie, et un capteur respectif est associé à chacun des bras (10B) placés dans la direction Y pour la détection des déplacements des bras respectifs (10B) dans la direction Z et donne des signaux correspondants de sortie, les capteurs associés aux bras (10C) qui sont dans la direction Z sont utilisés pour la détoction des forces de déplacement en translation appliquées au corps, par rapport à la base, le long de l'axe X et des couples appliqués au corps, par rapport à la base, autour de l'axe Y, et les capteurs associés aux bras (10B) qui sont dans la direction Y sont utilisés pour la détection des forces de déplacement en translation appliquées au corps, par rapport à la base, le long de l'axe Z et des couples appliqués au corps, par rapport à la base, autour de l'axe X.

**4.** Appareil selon la revendication 3, dans lequel un capteur respectif est associé à chacun des bras (10A) placés dans la direction X pour la détection des déplacements des bras respectifs (10A) dans la direction Y et donne des signaux correspondants de sortie, et dans lequel les capteurs associés aux bras (10A) placés dans la direction X sont destinés à détecter les forces de translation appliquées au corps, par rapport à la base, le long de l'axe Y et les couples appliqués au corps, par rapport à la base, autour de l'axe Z.

5. Appareil selon la revendication 3 ou 4 et dans lequel le corps (9) comprend un organe (9) formant boîtier qui a une partie de base fixe (8) disposée de façon générale au centre, un bras de montage (3) de la base fixe dépassant par le boîtier, et les bras élastiquement déformables de raccordement (10A, 10B, 10C) sont disposés suivant les axes respectifs X, Y et Z à partir de la partie de base fixe (8) afin qu'ils soient au contact du boîtier à des emplacements respectifs, chacun des bras de raccordement ayant un bout en forme de rotule (11A, 11B, 11C) qui coopère avec une fente correspondante (12A, 12B, 12C) du boîtier, les fentes (12A) qui logent les bouts (11A) des bras (10A) disposés dans la direction X ayant une orientation telle qu'elles permettent un déplacement de ces derniers bouts (11A) dans les directions X et Z mais non dans la direction Y, les fentes (12B) qui logent les bouts (11B) des bras (10B) disposés dans la direction Y ayant une orientation telle qu'elles permettent le déplacement des bouts précités (11B) dans les directions Y et X mais non dans la direction Z, et les fentes (12C) qui logent les bouts (11C) des bras (10C) placés dans la direction Z étant orientées afin qu'elles permettent un déplacement des bouts précités (11C) dans les directions Z et Y mais non dans la direction X, si bien que les capteurs associés à chacun des bras sont sensibles uniquement au déplacement du bras respectif accompagné d'une déformation élastique du bras respectif dont le bout est retenu par la fente qui le loge.

6. Appareil selon la revendication 5, dans lequel chacun des bras de raccordement (10A, 10B, 10C) est formé d'un matériau analogue à une bande élastique, les bandes placées dans les directions X, Y et Z ayant des plans respectifs qui sont perpendiculaires mutuellement.

7. Appareil selon la revendication 6, dans lequel chacun des capteurs comporte un élément obturateur (5) disposé afin qu'il interrompe normalement partiellement un faisceau d'un rayonnement électromagnétique allant d'une source (2) à un dispositif électronique (3) sensible à ce rayonnement, ce dispositif (3) étant destiné à être connecté à un circuit, les caractéristiques du dispositif (3) variant avec la quantité du rayonnement électromagnétique qui parvient sur lui et correspondant ainsi à la position de l'élément obturateur (5).

8. Appareil destiné à transmettre des signaux de commande, comprenant un corps (30) auquel des forces peuvent être appliquées dans n'importe quelle direction et des couples peuvent être appliqués autour d'un axe quelconque, des organes de raccordement (33A, 33B) fixés au corps (30) et ayant chacun un point respectif distant de raccordement (35), les organes de raccordement (33A, 33B) s'écartant du corps (30) de manière que, dans la position centrale du corps (30), les points distants de connexion (35) des organes de raccordement (33A, 33B) se trouvent sur des axes différents parmi les trois axes perpendiculaires de référence (X, Y, Z) partant d'un point central du corps (30), chacun des organes de raccordement (33A, 33B) étant raccordé au corps (30) afin qu'il puisse pivoter autour d'un axe différent parmi les axes de référence (X, Y, Z), des branches respectives (32A, 32B) étant fixées à la base fixa (34) et étant raccordées sous forme articulée aux organes respectifs de raccordement (33A, 33B) aux points de raccordement (35) par des joints universels ayant au moins un mouvement et une plage limités, un dispositif de rappel (36) étant disposé afin qu'il rappelle les organes de raccordement (33A, 33B) vers le point central, et des dispositifs capteurs (39, 42, 47) formant une disposition au moins bidimensionnelle et sensiblement symétrique destinée à la détection du déplacement de chaque organe de raccordement (33A, 33B) et/ou de chaque branche (32A, 32B), si bien que la nature de la force appliquée et du couple appliqué par rapport à au moins deux axes de référence peut être déterminée et un signal correspondant de sortie peut être transmis.

9. Appareil selon la revendication 8, comprenant trois organes de raccordement fixés au corps (30), pouvant pivoter autour d'axes respectifs parmi les axes de référence (X, Y, Z) et ayant des points de raccordement (35) qui se trouvent sur des axes respectifs parmi les axés de référence.

10. Appareil selon la revendication 8 ou 9, dans lequel le corps comporte en outre un élément (30) en forme de rotule et chaque bras de raccordement (33A, 33B, 33C) est un bras coudé ayant une petite partie de montage du bras sur le corps (30) autour d'un axe de pivotement disposé perpendiculairement à l'axe de manoeuvre (X, Y, Z) applicable à ce bras, et une grande partie partant d'une partie périphérique de l'élément à rotule (30) vers le joint universel (35) et formant un angle avec l'axe de manoeuvre.

**11.** Appareil selon la revendication 8 ou 9, dans lequel chaque bras de montage (33A, 33B, 33C) a une forme générale en Y et comporte un organe (35A) dépassant transversalement d'une première partie d'extrémité pour la formation du raccord à joint universel (35) avec la branche associée, et les extrémités distantes des autres bras ont des trous transversaux respectifs (51) qui sont coaxiaux et permettent la fixation pivotante par l'intermédiaire d'éléments allongés de fixation au corps (30), le corps ayant une forme de rotule et possédant une base (30a) ayant un flasque dépassant vers l'extérieur alors que l'autre bras (52) est introduit dans le trou (30d) formé dans le corps en forme de rotule, les axes des trous transversaux formés dans les bras respectifs en Y se trouvant sur les axes X, Y et Z de l'appareil, les axes se recoupant au centre du corps en forme de rotule.

**12.** Appareil selon l'une quelconque des revendications 8 à 11, dans lequel chacune des branches est sous forme d'une structure élastique de raccordement comprenant un organe en forme de plaque (32A) formant un organe de joint universel destiné à coopérer avec le bras de montage (33A, 33B, 33C) et une structure à branche élastique (36A, 36B, 36C) dépassant perpendiculairement à l'organe en forme de plaque (32A) et rappelant l'organe en forme de plaque vers une position centrale tout en permettant un déplacement élastique de l'organe en forme de plaque dans son plan propre, les dispositifs capteurs (39, 47) étant disposés afin qu'ils contrôlent les déplacements en direction parallèle au plan de la plaque.

**13.** Appareil selon la revendication 12, dans lequel chacune des structures élastiques de raccordement comporte un organe rigide de base (34) destiné à être fixé dans ledit espace et formant au moins une partie de la base de l'appareil, un raccord rigide (36B), et un ensemble de tiges élastiques normalement espacées parallèlement les unes aux autres et placées à distance autour d'un axe partant de l'organe rigide de base et sensiblement perpendiculaire à celui-ci, les tiges comprenant un premier ensemble (36C) d'au moins trois tiges fixé à l'organe rigide de base (34) et fixé au raccord rigide (36B), et un seconde ensemble (36A) d'au moins trois tiges partant du raccord rigide et passant par dos ouvertures respectives de l'organe rigide de base (34) afin qu'il soit raccordé à l'organe en forme de plaque (32A).

**14.** Appareil selon la revendication 11, dans lequel chacune des branches est sous forme d'une structure élastique de raccordement comprenant un organe en forme de plaque (32A, 32B, 32C) formant un organe de joint universel destiné à coopérer avec le bras de montage (33A, 33B, 33C) et une structure à branche élastique (36A, 36B, 36C) dépassant perpendiculairement à l'organe en forme de plaque (32A) et rappelant l'organe en forme de plaque vers une position centrale et permettant un déplacement élastique de l'organe en forme de plaque dans son plan, le dispositif capteur (47, 39, 39C) étant destiné à contrôler les déplacements en direction parallèle au plan de la plaque.

**15.** Appareil selon l'une quelconque des revendications 8 à 14, dans lequel chacun des dispositifs capteurs comporte un dispositif photoémissif (2) et un dispositif (3) de détection de lumière aligné axialement pratiquement en direction perpendiculaire à l'axe respectif, et un masque de commande raccordé aux organes respectifs de raccordement (33A, 33B, 33C) et destiné à faire varier le degré d'interruption de la lumière transmise au dispositif de détection de lumière si bien que l'amplitude du signal de sortie peut être utilisée pour la détermination du couple appliqué et/ou de la force appliquée.

**16.** Appareil selon la revendication 3, dans lequel l'ensemble des dispositifs capteurs comporte six dispositifs capteurs (2 et 3), chaque dispositif capteur étant monté avec une limitation respective de sensibilité au déplacement pour un couple ou une force appliqué quelconque, le premier du dispositif capteur étant sensible au déplacement dans la direction X mais non au déplacement dans les directions Y ou Z, le second dispositif capteur étant sensible au déplacement dans la direction Y mais non dans les directions X ou Z, et le troisième capteur étant sensible au déplacement dans la direction Z mais non dans les directions X ou Y.

**17.** Appareil selon la revendication 16, dans lequel chaque dispositif capteur comporte un élément obturateur (5), un dispositif destiné à former un faisceau d'un rayonnement électromagnétique (2), un dispositif de détection aligné sur le faisceau et destiné à détecter le rayonnement électromagnétique et donnant un signal correspondant au rayonnement incident, l'élément obturateur étant monté normalement afin qu'il interrompe partiellement le faisceau et étant sensible au déplacement produit sous forme d'une composante d'un couple appliqué et/ou d'une force appliquée afin que la quantité du faisceau parvenant sur le dispositif de détection varie.

18. Appareil selon la revendication 16 ou 17 et dans lequel le corps (9) comporte un boîtier qui entoure pratiquement la base (8), la base ayant une tige de montage (3) qui dépasse du boîtier afin qu'elle permette le montage de l'appareil.

FIG. 1

16

FIG. 2

FIG. 3

FIG. 4

FIG. 5

FIG. 6

FIG.8

FIG.9

FIG.7

FIG. 10

FIG. 11

FIG. 12

FIG. 13